(19) Europäisches Patentamt
European Patent Office
Office européen des brevets

(11) Veröffentlichungsnummer: **0 207 175**
**A1**

(12) **EUROPÄISCHE PATENTANMELDUNG**

(21) Anmeldenummer: 85106782.7

(22) Anmeldetag: 01.06.85

(51) Int. Cl.[4]: **G 05 B 19/405**
G 05 B 19/403

(43) Veröffentlichungstag der Anmeldung:
**07.01.87 Patentblatt 87/2**

(84) Benannte Vertragsstaaten:
**AT BE CH DE FR GB IT LI LU NL SE**

(71) Anmelder: **Mohr, Karl**
**Hattersheimer Strasse 11**
**D-6238 Hofheim(DE)**

(71) Anmelder: **Mohr, Wolfgang**
**Hundshager Weg 42**
**D-6238 Hofheim(DE)**

(72) Erfinder: **Mohr, Karl**
**Hattersheimer Strasse 11**
**D-6238 Hofheim(DE)**

(72) Erfinder: **Mohr, Wolfgang**
**Hundshager Weg 42**
**D-6238 Hofheim(DE)**

(74) Vertreter: **Quermann, Helmut, Dipl.-Ing.**
**Dotzheimer Strasse 61**
**D-6200 Wiesbaden(DE)**

(54) **Schneidemaschine mit Rechnersteuerung.**

(57) Es wird eine Schneidemaschine mit motorisch angetriebenem Messer, einem Preßbalken, einer Positioniervorrichtung für das Schneidgut, einer einen Rechner aufweisenden Ablaufsteuerung und einem Bedienpult beschrieben, deren Besonderheit darin besteht, daß das Bedienpult (4) einen eigenen Hilfsrechner (11) zur Abfrage der Tasten (5, 6, 7, 9) und sonstigen Betätigungs- und Einstellorgane (10) des Bedienpultes ausgestattet ist, wobei der Hilfsrechner (11) zur Übertragung der Abfrageergebnisse über eine einzige serielle Datenleitung (12) mit dem Hauptrechner (1) der Ablaufsteuerung verbunden ist. Ein Bildschirmgerät (8), das ebenfalls vom Hauptrechner gesteuert wird, zeigt der Bedienungsperson die jeweiligen Programme mit allen Einstell- und Maßangaben an und ermöglicht einen Dialogbetrieb.

4
11
8
7
10
5
6
12
2
16
15
14
13
1
18
17
19
9



Croydon Printing Company Ltd.

# Schneidemaschine mit Rechnersteuerung

Die Erfindung betrifft eine Schneidemaschine mit motorisch angetriebenem Messer, einem Preßbalken, einer Positioniervorrichtung für das Schneidgut, einer einen Rechner aufweisenden Ablaufsteuerung und einem Bedienpult.

Schneidemaschinen für Papier, Pappe und ähnliche Materialien sind in vielerlei Varianten bekannt. Zur Erhöhung der Arbeitsgeschwindigkeit, der Schnittgenauigkeit bei automatischem Positionieren des Schneideguts sowie der Sicherheit des Bedienungspersonals und der Bedienungsvereinfachung ist es auch bereits bekannt, solche Maschinen mit einem motorischen Antrieb in Form von Elektromotoren und Hydraulikzylindern für die einzelnen Arbeitsvorgänge, also das Positionieren, Anpressen und Schneiden zu versehen, wobei eine Ablaufsteuerung für den richtigen und sicheren Funktionsablauf sorgt. Zur einfachen Verwirklichung auch komplizierter Funktionsabläufe unter Berücksichtigung von Sicherheitsmerkmalen hat man die Ablaufsteuerung auch schon unter Verwendung eines Rechners in Form eines Mikroprozessors mit zugeordneten Bauteilen, also insbesondere einem Speicher mit einem abgestimmten Programm und Eingangs-Ausgangs-Bauteilen einschließlich eines Bedienpultes verwirklicht. Wenn jedoch erhöhte Anforderungen an die Genauigkeit und Geschwindigkeit bei komplizierten Funktionen und Abläufen sowie die Möglichkeit der Speicherung und Darstellung einer Vielzahl von Programmabläufen mit gleichzeitigen Prüf- und Überwachungsfunktionen gestellt werden, so befriedigen die bisherigen, rechnergesteuerten Schneidemaschinen noch nicht den Anforderungen.

Der Erfindung liegt demgemäß die Aufgabe zugrunde, eine rechnergesteuerte Schneidemaschine mit motorischem Antrieb zu schaffen, die jedes einer Vielzahl von gespeicherten Programmen schnell und sicher bei großer Genauigkeit ausführen kann und auch einen direkten manuellen Betrieb über das Bedienpult ermöglicht. Zur Lösung der Aufgabe geht die Erfindung aus von einer Schneidemaschine der eingangs genannten Art und ist dadurch gekennzeichnet, daß das Bedienpult mit einem eigenen Hilfsrechner zur Abfrage der Tasten, Schalter und sonstigen Betätigungs- und Einstellorganen des Bedienpultes ausgestattet ist und daß der Hilfsrechner zur Übertragung der Abfrageergebnisse mit dem Hauptrechner der Ablaufsteuerung verbunden ist. Auf diese Weise gelingt es, den Hauptrechner so zu entlasten, daß seine volle Rechenkapazität für die komplizierten Abläufe im Realzeitbetrieb zur Verfügung steht. Routinefunktionen, insbesondere die Tasten- und Schalterabfrage, werden von dem Hilfsrechner übernommen, der dann jeweils nur die Ergebnisse seiner Verarbeitung dem Hauptrechner zur Verfügung stellt, beispielsweise die Angabe "Taste X ist gedrückt worden". Ein weiterer Vorteil ergibt sich dadurch, daß das Bedienpult mit seinem eigenen Hilfsrechner nur noch über wenige Leitungen mit der Ablaufsteuerung verbunden werden muß, neben den Stromversorgungsleitungen also beispielsweise nur mit einer einzigen Datenverbindung zur Übertragung serieller Daten. Im Gegensatz dazu müßten im anderen Falle alle Tasten, Schalter und sonstigen Betätigungsorgane getrennt über eine eigene Leitung mit der Ablaufsteuerung verbunden sein. Neben Schwierigkeiten, die durch die oft beengten Platzverhältnisse in einer solchen Schneidmaschine insbesondere im Bereich des Bedienungspultes auftreten, ergeben sich dadurch auch größere Störungswahrscheinlichkeiten.

Weiterbildungen der Erfindung sind Gegenstand der Unteransprüche. So kann, wie bereits erwähnt, vorgesehen sein, daß der Hilfsrechner so ausgelegt ist, daß er die Abfrageergebnisse seriell über eine einzige Leitung überträgt. Darüberhinaus kann der Hilfsrechner in seinem Speicher Programmfolgen zur Prüfung seiner eigenen Funktionsfähigkeit und fehlerhaften Betriebsweise enthalten. Eine Überwachung durch den Hauptrechner ist dann nicht mehr erforderlich.

Die Schneidemaschine wird vorzugsweise mit einem Bildschirmgerät zur Darstellung von Arbeitsprogrammen für die Maschine, Betriebszuständen der Maschine, Bedienungs- und Fehlerhinweisen sowie sonstigen Daten ausgestattet, wobei das Bildschirmgerät vom Hauptrechner über eine Schnittstellenschaltung gesteuert wird. Die Bedienungsperson kann auf diese Weise nach Art eines Dialogbetriebs arbeiten, wodurch eine wesentliche Erleichterung auch bezüglich des Ausbildungsgrades erreicht wird. Das Bildschirmgerät wird mit Vorteil schwenk- und verschiebbar oberhalb des Bedienpultes an der Maschine angeordnet, so daß es für die jeweilige Bedienungsperson und den jeweiligen Arbeitsablauf an die ergonomisch günstigste Stelle gebracht werden kann.

Eine zusätzliche Weiterbildung sieht vor, daß der Speicher des Hauptrechners in der Ablaufsteuerung so ausgelegt ist, daß für eine frei wählbare Anzahl von Datensätzen für jeweils ein Schneidprogramm zusätzliche Informationen von Texten und Daten speicherbar sind. Dadurch erhält das Bedienungspersonal zusätzliche Hinweise bezüglich des jeweiligen Schneidprogramms, beispielsweise bezüglich der Abwicklung des jeweiligen Auftrages, seiner Abrechnung usw.

Für die praktische Verwirklichung sieht die Erfindung in ihrer weiteren Ausbildung vor, daß an einem Eingangs-/Ausgangsbus des Hauptrechners parallel eine Anzahl von Schaltungseinheiten angeschlossen ist, die über Relais und Ventile die Arbeitsabläufe der Maschine steuert. Durch einen solchen modulartigen Aufbau, bei dem die einzelnen Schaltungseinheiten beispielsweise in Form von Steckkarten ausgeführt sind, lassen sich Wartungs- und Reparaturarbeiten sowie auch spätere Ergänzungen und Änderungen besonders einfach ausführen. Eine der Schaltungseinheiten kann dabei den sicheren Ablauf der Schneidzyklen durch elektrische Betätigung von Hydraulikventilen für die Kupplung des Schneidmessers und die Antriebszylinder des Preßbalkens sowie eines Sicherheitssperrbolzens für das Schneidmesser steuern. Zweckmäßig besitzt der Hauptrechner neben dem Eingangs-Ausgangsbus einen schnellen Steuerbus, an den die Schnittstellenschaltung des Bildschirmgerätes angeschlossen ist. Auf diese Weise lassen sich ohne Schwierigkeiten die großen, zur Versorgung des Bildschirmgerätes erforderlichen Datenmengen schnell übertragen. An den schnellen Steuerbus kann außerdem eine Schaltungseinheit angeschlossen sein, die das Ein- und Ausschalten der Motoren und Bremsen der Positioniereinrichtung steuert.

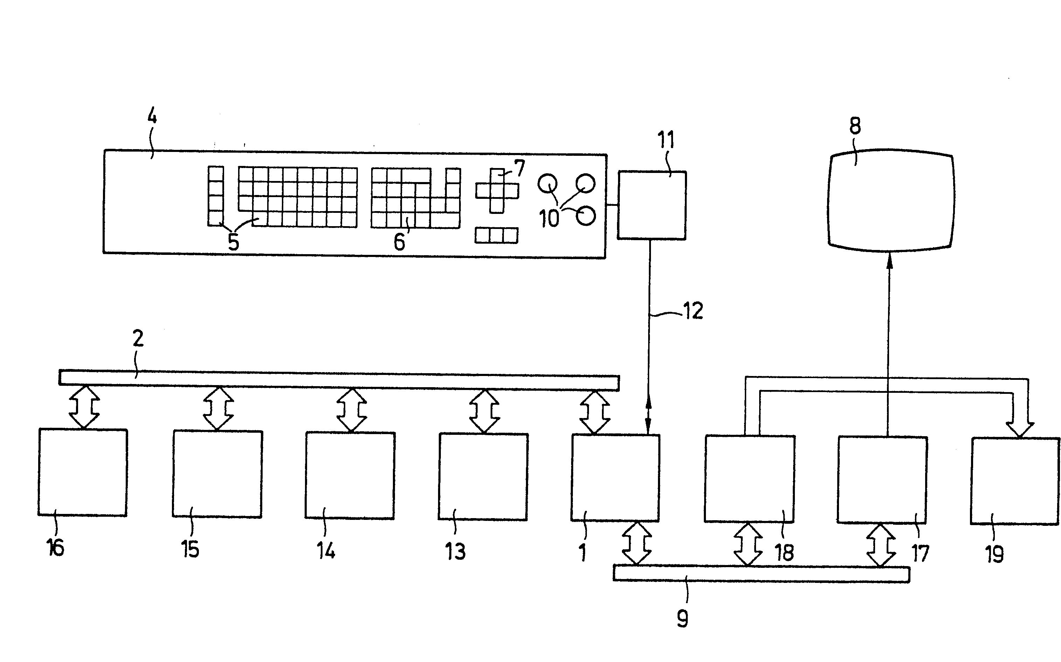

Nachfolgend wird die Erfindung anhand der Zeichnung beschrieben, die ein schematisches Blockschaltbild der Steuerung für die Schneidemaschine zeigt.

Da der prinzipielle Aufbau einer Schneidemaschine mit ihren mechanischen und elektrischen Bestandteilen als bekannt vorausgesetzt werden kann, ist eine zusätzliche Beschreibung anhand von Darstellungen für den Druckschnittsfachmann nicht erforderlich.

Bei der gezeigten Ablaufsteuerung ist das zentrale Bauteil ein Hauptrechner 1, der vorzugsweise einen 16-Bit-Mikroprozessor enthält. Mit den übrigen Bauteilen der Ablaufsteuerung tritt der Hauptrechner über einen Eingangs-Ausgangsbus 2 und einen Steuerbus 3 in Verbindung. Der Eingangs-Ausgangsbus kann dabei ein verhältnismäßig langsam und mit höherer Spannung von beispielsweise 12 V betriebener Bus mit 16 parallelen Bitleitungen sein. Die Störanfälligkeit eines solchen Eingangs-Ausgangsbus ist in erwünschter Weise wegen der höheren Betriebsspannung sehr niedrig. Dagegen ist der Steuerbus 3 ein schneller Bus, der mit verhältnismäßig niedriger Spannung (5 V) betrieben wird und eine etwas höhere Störanfälligkeit besitzt. Das läßt sich aber durch Überwachungen und Rückmeldungen sowie gegebenenfalls Fehlerkorrekturcodierungen ausgleichen.

Ein Bedienpult 4 weist mehrere Tastenfelder und Einstellorgane auf, nämlich ein größeres Tastenfeld 5 zur Eingabe von Klartext und Zusatzfunktionen, ein kleineres Tastenfeld 6 zur Bedienung eines kleinen Rechners nach Art eines Taschenrechners, mit dem beispielsweise Schnittmaße berechnet werden können. Steuertasten 7 für den sogenannten Cursor auf dem später noch zu erläuternden Bildschirm 8, Schnellsuchtasten 9 für die Voreinstellung des Sattels nach einem vorgegebenen Druckbild sowie Regelorgane 10 für den Verzugsausgleich, die Nutzenkorrektur beim Repetieren und die Vorwahl der Preßzeit. Dem Bedienpult 4 ist ein eigener Hilfsrechner 11 zugeordnet, der insbesondere für die Abfrage der Tasten und Einstellorgane sorgt. Zusätzlich enthält der Speicher des Hilfsrechners 11, der ebenfalls unter Einsatz eines Mikroprozessors verwirklicht ist, Prüfprogramme für eine fehlerfreie Funktion. Der Hilfsrechner 11 steht über eine einzige vieradrige, serielle Datenleitung 12 mit dem Hauptrechner 1 in Verbindung.

Unter Auswertung der die Betätigung der Tasten und Einstellorgane des Bedienpultes 4 wiedergebenden Ausgangssignale des Hilfsrechners 11 sowie seiner gespeicherten Programme und der von den weiteren Baugruppen der Schneidmaschine kommenden Positions- und Zustandssignale steuert der Hauptrechner 1 die einzelnen Schaltungseinheiten und damit den Betrieb der Schneidemaschine. Über den Eingangs-/Ausgangsbus 2 werden Schaltungseinheiten 13, 14, 15 und 16 gesteuert.

Die Schaltungseinheit 13 sorgt für den fehlersicheren Ablauf der Schneidzyklen, insbesondere für die Steuerung der Kupplung des Schneidmessers, der Antriebszylinder des Preßbalkens sowie des Sicherheitssperrbolzens für das Schneidmesser. Die Schaltungseinheiten 14 bis 16 steuern Sonder- und Zusatzausrüstungen an der Maschine, insbesondere Motoren, Ventile und Relais für die Betätigungs- und Arbeitseinheiten der Schneidemaschine.

Über den schnellen Steuerbus 3 wird eine Video-Schnittstellenschaltung 17 für die Bildschirmeinheit 8 angesteuert. Außerdem ist an den Steuerbus 3 eine Positionier-Schaltungseinheit angeschlossen, die alle für die Sattelbewegung notwendigen Baugruppen enthält, insbesondere eine Zählerkette für die Bewegungsimpulse eines Längenmeßsystems, einen Vorwähler zur Einstellung von Referenzmaßen sowie Eingänge für die Befehlsgabe, einen Grenzlagentaster und Ausgänge zur Steuerung eines Sattelantriebsmotors und einer Sattelbremse.

Anmelder: Karl Mohr, Fabrikant, Hattersheimer Str. 11
Wolfgang Mohr, Ingenieur, Hundshager Weg 42
6238 Hofheim / Taunus

## Patentansprüche

1. Schneidemaschine mit motorisch angetriebenem Messer, einem Preßbalken, einer Positioniervorrichtung für das Schneidgut, einer einen Rechner aufweisenden Ablaufsteuerung und einem Bedienpult, dadurch gekennzeichnet, daß das Bedienpult (4) mit einem eigenen Hilfsrechner (11) zur Abfrage der Tasten (5, 6, 7, 9) und sonstigen Betätigungs- und Einstellorgane (10) des Bedienpultes (4) ausgestattet ist, und daß der Hilfsrechner (11) zur Übertragung der Abfrageergebnisse mit dem Hauptrechner (1) der Ablaufsteuerung verbunden (12) ist.

2. Schneidemaschine nach Anspruch 1, dadurch gekennzeichnet, daß der Hilfsrechner (11) so ausgelegt ist, daß er die Abfrageergebnisse seriell über eine einzige Leitung (12) überträgt.

3. Schneidemaschine nach Anspruch 1 oder 2, dadurch gekennzeichnet, daß der Hilfsrechner (11) in seinem Speicher Programmfolgen zur Prüfung seiner eigenen Funktionsfähigkeit und fehlerfreien Betriebsweise enthält.

4. Schneidemaschine nach einem der Ansprüche 1 - 3, dadurch gekennzeichnet, daß die Maschine mit einem Bildschirmgerät (8) zur Darstellung von Arbeitsprogrammen für die Maschine von Betriebszuständen der Maschine, Bedienungs- und Fehlerhinweisen sowie sonstigen Daten ausgestattet ist, und daß das Bildschirmgerät (8) vom Hauptrechner (1) über eine Schnittstellenschaltung (17) gesteuert wird.

5. Schneidemaschine nach Anspruch 4, dadurch gekennzeichnet, daß das Bildschirmgerät (8) schwenk- und verschiebbar oberhalb des Bedienpultes (4) an der Maschine angeordnet ist.

6. Schneidemaschine nach einem der Ansprücne 1-5, dadurch gekennzeichnet, daß der Speicher des Hauptrechners (1) in der Ablaufsteuerung so ausgelegt ist, daß für eine frei wählbare Anzahl von Datensätzen für jeweils ein Schneidprogramm zusätzliche Informationen in Form von Texten oder Daten speicherbar sind.

7. Schneidemaschine nach einem der Ansprüche 1-6, dadurch gekennzeichnet, daß an einem Eingangs-Ausgangsbus (2) des Hauptrechners (1) parallel eine Anzahl von Schaltungseinheiten (13 bis 16) angeschlossen ist, die über Relais und Ventile die Arbeitsabläufe der Maschine steuern.

8. Schneidemaschine nach Anspruch 7, dadurch gekennzeichnet, daß eine der Schaltungseinheiten (13) den sicheren Ablauf der Schneidzyklen durch elektrische Betätigung von Hydraulikventilen für die Kupplung des Schneidmessers und die Antriebszylinder des Preßbalkens sowie eines Sicherheitssperrbolzens für das Schneidmesser steuert.

9. Schneidemaschine nach Anspruch 7 oder 8, dadurch gekennzeichnet, daß der Hauptrechner (1) neben dem Eingangs-Ausgangsbus (2) einen schnellen Steuerbus (3) besitzt, an den die Schnittstellenschaltung (17) des Bildschirmgerätes (8) angeschlossen ist.

10. Schneidemaschine nach Anspruch 9, dadurch gekennzeichnet, daß an den schnellen Steuerbus (3) eine Schaltungseinheit (18) angeschlossen ist, die das Ein- und Ausschalten der Motoren und Bremsen der Positioniereinrichtung steuert.

19
17
18
8
12
11
9
1
10
7
13
6
14
5
15
4
2
16

Europäisches Patentamt

**EUROPÄISCHER RECHERCHENBERICHT**

0207175

Nummer der Anmeldung

EP 85 10 6782

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | WERKSTATTSTECHNIK, ZEITSCHRIFT FÜR INDUSTRIELLE FERTIGUNG, Band 73, Nr. 12, Dezember 1983, Seiten 749-753, Würzburg, DE; A. HERRSCHER: "Numerische Steuerung eines Sechsspindel-Drehautomaten" * Seite 750, linke Spalte, Zeilen 15-20, 27-28, Zeile 66 - rechte Spalte, Zeile 1; rechte Spalte, Zeile 22 - Seite 751, linke Spalte, Zeile 2; Bild 3; Seite 752, rechte Spalte, Zeilen 43-46 * | 1-4,7, 10 | G 05 B 19/405<br>G 05 B 19/403 |
| A | US-A-4 430 879 (B.A. ROLLAND; HURCO) * Spalte 2, Zeilen 58-61; Figur 1 * | 5 | |
| | | | **RECHERCHIERTE SACHGEBIETE (Int Cl 4)** |
| A | WO-A-8 400 626 (FANUC) * Zusammenfassung * | 3 | G 05 B |
| A | WO-A-8 404 827 (FANUC) * Zusammenfassung * | 6 | |
| A | FR-A-2 346 757 (OLIVETTI) * Seite 4, Zeilen 1-9; Figur 1 * | 7,9 | |

--- -/-

Der vorliegende Recherchenbericht wurde für alle Patentansprüche erstellt

| Recherchenort | Abschlußdatum der Recherche | Prüfer |
|---|---|---|
| DEN HAAG | 21-02-1986 | CORNILLIE O.A.R. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

Europäisches
Patentamt

# EUROPÄISCHER RECHERCHENBERICHT

Nummer der Anmeldung

EP 85 10 6782



## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| A | DE-A-2 752 418 (SCHNEIDERWERK LÜBECK) * Seite 7, Zeile 4 - Seite 10, Zeile 12; Bild 1 * | 1,8,10 | |
| | ----- | | |
| | | | RECHERCHIERTE SACHGEBIETE (Int Cl 4) |

Der vorliegende Recherchenbericht wurde für alle Patentansprüche erstellt

| Recherchenort | Abschlußdatum der Recherche | Prüfer |
|---|---|---|
| DEN HAAG | 21-02-1986 | CORNILLIE O.A.R. |

KATEGORIE DER GENANNTEN DOKUMENTEN

- X : von besonderer Bedeutung allein betrachtet
- Y : von besonderer Bedeutung in Verbindung mit einer anderen Veröffentlichung derselben Kategorie
- A : technologischer Hintergrund
- O : nichtschriftliche Offenbarung
- P : Zwischenliteratur
- T : der Erfindung zugrunde liegende Theorien oder Grundsätze
- E : älteres Patentdokument, das jedoch erst am oder nach dem Anmeldedatum veröffentlicht worden ist
- D : in der Anmeldung angeführtes Dokument
- L : aus andern Gründen angeführtes Dokument
- & : Mitglied der gleichen Patentfamilie, übereinstimmendes Dokument